# FASCICULE DE BREVET EUROPEEN

(11) **EP 1 592 315 B1**
(45) Date de publication et mention de la délivrance du brevet: **06.01.2010**
(21) Numéro de dépôt: 04706211.2
(22) Date de dépôt: 29.01.2004
(51) Int. Cl.: A41C 3/10, A41C 5/00

(54) **ARTICLE TEXTILE DE LINGERIE MOULE, NOTAMMENT SOUTIEN-GORGE, AVEC REGION DE MAINTIEN EN SILICONE**
GEFORMTER TEXTILER DESSOUS-ARTIKEL, BESONDERS EIN BÜSTENHALTER MIT EINEM AUS SILIKON HERGESTELLTEN STÜTZBEREICH
MOULDED TEXTILE LINGERIE ITEM, PARTICULARLY A BRA WITH A SUPPORT REGION MADE FROM SILICONE

(30) Priorité: 03.02.2003 FR 0301193
(43) Date de publication de la demande: 09.11.2005
(73) Titulaire: DBA Lux 1 Sàrl, 2220 Luxembourg (LU)
(72) Inventeur: WATRIN, Francis, F-71540 Lucenay l'Evêque (FR); TURLAN, Manon, F-71710 Marmagne (FR)
(74) Mandataire: Bertrand, Didier
(86) Numéro de dépôt international: PCT/FR2004/000206
(87) Numéro de publication internationale: WO 2004/068977

(56) Documents cités:
- DE-A- 10 112 251
- DE-U- 9 107 681
- JP-A- 11 172 505
- US-A- 4 372 321
- US-A- 5 154 659
- US-B1- 6 332 825
- US-B1- 6 425 800
- PATENT ABSTRACTS OF JAPAN vol. 1996, no. 02, 29 février 1996 (1996-02-29) & JP 07 278909 A (WACOAL CORP), 24 octobre 1995 (1995-10-24)

## Description

La présente invention concerne un procédé de fabrication d'un article textile de lingerie, et notamment un soutien-gorge.

Il est connu de réaliser des soutien-gorge en matière textile élastique qui apporte à l'utilisatrice une sensation de légèreté et de confort, malheureusement souvent contrecarrée par les dispositifs de renforcement et de soutien destiné à maintenir correctement la poitrine en dépit de élasticité de la matière textile. Ces dispositifs peuvent consister en armatures comme dans la confection classique, ces armatures étant généralement considérées comme désagréables, ou en couches de tissu de renforcement, comme connu par exemple par le document EP 0 809 945 faisant connaître des pièces de renfort contrecollées ayant l'inconvénient de durcir le vêtement et de nuire à son extensibilité.

On sait également fabriquer, par exemple par les documents US 3981310, US 4432364, US 5855124 ou US 5154659 des soutien-gorge dans lesquels les bonnets sont moulés à chaud. Toutefois, le confort et le soutien obtenus par ces techniques laissent encore à désirer.

On connaît par JP 11-172505 un article de soutien-gorge comportant deux couches textiles tricotées en matière ayant des températures de ramollissement différentes.

Le but de l'invention est d'apporter à un soutien-gorge, une caractéristique de maintien efficace, mais qui ne soit pas inconfortable pour l'utilisatrice.

Ce but est atteint dans le cadre d'un article textile en matière textile élastique, comportant au moins une zone destinée à être formée par moulage à chaud par le fait que, selon l'invention, l'article comporte au moins sur une partie de ladite zone une région de soutien dans laquelle la matière textile est revêtue avant moulage à chaud d'une matière à mémoire de forme non moulable.

Par matière à mémoire de forme non moulable, on entend une matière qui, lorsqu'elle est moulée simultanément à la couche de textile sur laquelle elle se trouve, tend à retrouver élastiquement après moulage la forme initiale qu'il avait avant moulage et donc exerce sur la matière textile à laquelle elle est combinée une action élastique de maintien.

La matière à mémoire de forme est selon l'invention un caoutchouc de silicone de classe médicale qu'on dépose et réticule sur la matière textile avant le moulage à chaud de l'article. Il s'agit de préférence d'un élastomère bi-composant vulcanisable à chaud, de type connu sous le nom de LSR (liquid silicone rubber) : un tel élastomère polymérise par réaction de polyaddition à partir de 150 °C. Il s'agit d'élastomère de type polyméthysiloxane avec des groupes vinyliques et des charges, pour lequel on pourra utiliser un catalyseur de type platine, et un accélérateur de même type.

Lorsque le silicone est déposé sur le textile, il tend à s'accrocher aux fibres durant la réticulation et se solidarise donc bien avec le tissu.

Le silicone peut être déposé par enduction ou par impression ou par tout autre procédé. La couche de silicone déposée peut former des reliefs ou être lisse. La couche peut être déposée de manière à former une couche continue ou au contraire reproduire le réseau de fibres textiles sur lequel elle est déposée en respectant les trous naturels formés par le réseau des mailles. La couche de silicone peut être déposée par impression de façon à former un gabarit d'article de lingerie ou tout autre dessin. La matière textile enduite de silicone peut être recouverte d'une autre matière ou de la même matière textile, de façon à créer un complexe textile-silicone-textile. Dans ce cas, le silicone fait office de colle entre les deux matières textiles.

La dépose peut se faire selon un gabarit déterminé ou en laize (le gabarit est alors découpé par la suite).

Dans l'application préférée mais non exclusive de l'invention, l'article est un soutien-gorge et les zones moulées sont les bonnets.

Avantageusement, la région de soutien s'étend principalement sur la partie inférieure des bonnets. De préférence, que la région forme une surface représentant au moins la moitié de la partie inférieure des bonnets. Avantageusement, la région forme un secteur angulaire de bonnet.

Avantageusement encore, la région de soutien s'étend à la partie de basque située sous le bonnet ; de plus, la région de soutien peut comporter une partie verticale latérale continue, extérieure au bonnet.

L'utilisation du silicone en lingerie n'est pas nouvelle. En général, le silicone est utilisé pour ses qualités adhésives s'opposant au glissement. Ainsi, on connaît par les brevets FR 2 749 167, DE 200 00 635 des bandes de silicone anti-glissement pour les chaussettes, bas et collants. On connaît par les documents GB 1 171 063 et WO98/09013 des collants ou analogues dont une partie est imprégnée de silicone pour réaliser in situ la partie anti-glissement. On connaît aussi, par exemple par le document FR 2 808 972 au nom de la Demanderesse, un article de lingerie à bordure élastique réalisée en caoutchouc de silicone. On connaît également par le document US 6332825 un soutien-gorge dans lequel plusieurs bandes de silicone en couche mince sont placées sur différentes zones de l'article, y compris éventuellement sur les bonnets. Cependant, ces zones restent en forme de bandes réduites et surtout ne sont pas appliquées avant moulage à chaud de manière à exercer une action élastique de maintien.

On connaît également par le document FR 2 779 325 au nom de la Demanderesse, une coque moulée en silicone, éventuellement incorporée au textile du soutien-gorge. Dans cette coque, le silicone est en quantité importante et est de nature à permettre un moulage en forme. Au contraire, le silicone ne forme pas une coque avec la couche textile mais une simple enduction réalisée dans des conditions qui ne moulent pas en forme le silicone et lui laisse au contraire la mémoire de sa forme plane antérieure.

On obtient grâce à l'invention un produit léger et sans renfort qui permet de corriger le galbe de la poitrine. La silhouette est améliorée d'une manière qui était jusque là considérée comme impossible à réaliser avec des tissus aussi légers.

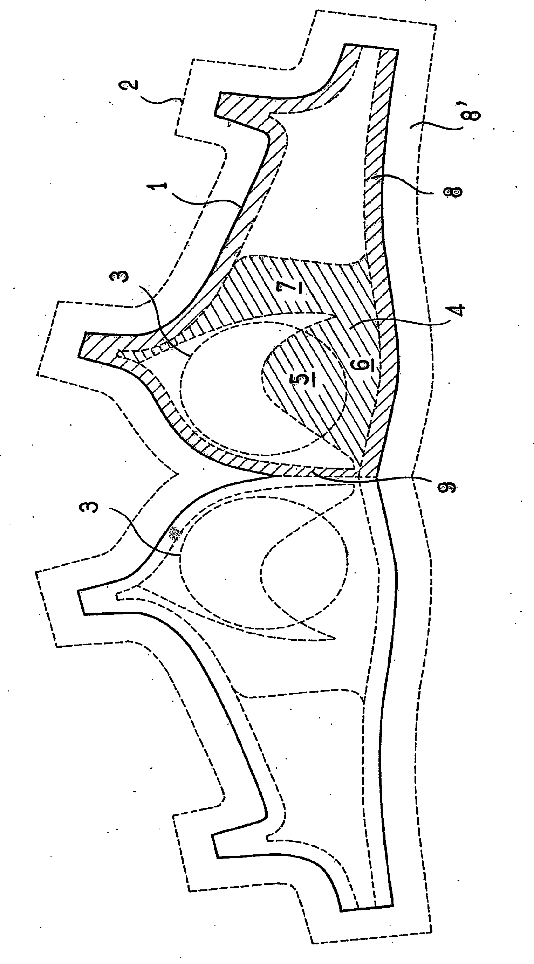

D'autres avantages et caractéristiques seront mis en évidence à la lecture de la description qui suit, en référence à la figure unique annexée qui représente une ébauche de soutien-gorge avec ses différentes zones et régions conformes à l'invention.

Le soutien-gorge 1 est réalisé à partir d'une ébauche 2 faite d'une pièce textile réalisée dans une matière élastique et légère. Il s'agit avantageusement d'un tissu de type charmeuse en fil synthétique (polyester ou polyamide) et contenant de l'élasthanne. Avantageusement, son poids au m² ne dépasse pas 200 g/m², mais dans le cas de textiles particuliers comme le sont les articles tricotés en double fonture, le poids peut aller jusqu'à 400 g/m². Son extension manuelle est d'au moins 80 % dans les deux sens. L'ébauche forme deux panneaux symétriques dont chacun comprend une zone 3 destinée à former, après formage à chaud, les bonnets du soutien-gorge.

Conformément à l'invention, on dépose sur la matière textile constituant l'ébauche du silicone au moins dans une région 4 qui chevauche au moins la zone 3. La région 4 comprend avantageusement au moins la partie inférieure de la zone 3, par exemple une partie correspondant sensiblement à un secteur 5 d'un quart à un tiers de la zone 3, se poursuivant dans la zone 6 de la basque du soutien-gorge, et éventuellement par une zone latérale 7 joignant le bord inférieur et le bord supérieur d'un panneau, et située à l'extérieur de la zone 3 de bonnet. Le silicone est avantageusement déposé en une épaisseur de préférence entre 0,5 mm et 1 mm, et de façon à former un aplat couvrant une zone relativement large de la partie inférieure du bonnet, au contraire des bandes déposées selon l'art antérieur.

De plus, le silicone est également avantageusement déposé aussi, de façon connue en soi, sur les bordures 8 des panneaux, et dans la zone médiane 9 des panneaux. En fait, le silicone est déposé également sur la zone marginale 8' de l'ébauche 2, ce qui permet une découpe nette et sans couture du bord du soutien-gorge 1.

Le silicone peut être déposé afin de se trouver uniquement du côté intérieur du soutien-gorge ou au contraire uniquement du côté extérieur.

Après dépose du silicone, le soutien-gorge passe dans un four dont la température est comprise entre 150 ° et 200 °, durant 30 secondes à 2 minutes, afin de réticuler le silicone. L'article de lingerie est ensuite thermoformé sur un moule de formage à chaud des bonnets, dans lequel la température atteinte est de l'ordre de 180°C. La base textile se déforme et conserve sa nouvelle forme, tandis que le silicone qui la recouvre tend à reprendre sa forme initiale et impose donc une tension élastique à l'article propice à un maintien souple de la poitrine et à un galbe élégant.

Il est possible, quoique non nécessaire, d'associer l'invention avec des éléments plus traditionnels de renfort si on le désire, tels que des armatures ou des bandes de renforcement.

L'invention a été décrite en référence avec un soutien-gorge qui constitue son application préférée. Néanmoins, le même principe pourrait s'appliquer par exemple pour un slip d'homme avec une zone de soutien moulée comportant une couche de silicone non moulé.

## Revendications

1. Procédé de fabrication d'un article textile de lingerie en matière textile élastique, comportant au moins une zone (3) destinée à être formée par moulage a chaud de l'article, l'article comportant au moins sur une partie (5) de ladite zone (3) une région de soutien dans laquelle la matière textile est revêtue, avant ledit moulage, d'une autre matière **caractérisé en ce que** ladite autre matière est un caoutchouc de silicone de classe médicale qu'on dépose et réticule sur la matière textile avant ledit moulage, et qui, lorsque ledit caoutchouc de silicone de classe médicale est moulé simultanément à la couche de textile sur laquelle il se trouve, tend à retrouver élastiquement la forme initiale qu'il avait avant ledit moulage.

2. Procédé selon la revendication 1, **caractérisé en ce que** le caoutchouc de silicone est un élastomère vulcanisable à chaud, de préférence bi-composant.

3. Procédé selon l'une quelconque des revendications précédentes, **caractérisé en ce que** le silicone est déposé par enduction ou impression sur la matière textile.

4. Procédé selon l'une quelconque des revendications 1 à 3, **caractérisé en ce que** l'article est un soutien-gorge et les zones thermoformées (3) sont les bonnets.

5. Procédé selon la revendication 4, **caractérisé en ce que** la région de soutien s'étend principalement sur la partie inférieure des bonnets.

6. Procédé selon la revendication 5, **caractérisé en ce que** la région forme une surface représentant au moins la moitié de la partie inférieure des bonnets (3).

7. Procédé selon la revendication 6, **caractérisé en ce que** la région forme un secteur angulaire de bonnet (3).

8. Procédé selon l'une quelconque des revendications 5 à 7, **caractérisé en ce que** la région de soutien s'étend à la partie (6) de basque située sous le bonnet (3).

9. Procédé selon la revendication 8, **caractérisé en ce que** la région de soutien comporte une partie verticale latérale continue, extérieure au bonnet (3).

## Claims

1. A textile article made of elastic textile material, comprising at least one zone (3) intended to be shaped by thermal molding, the article comprising at least on one part (5) of said zone (3) a support region, in which the textile material is coated prior to said molding with another material, **characterized in that** said other material a medical class silicone rubber which is deposited and crosslinked on the textile material prior to said molding, and which, when said medical class silicone rubber is molded simultaneously to the textile layer on which it is disposed, tends to elastically recover its initial shape it had prior to said molding.

2. The article according to Claim 1, wherein the silicone rubber is a thermally vulcanizable elastomer, preferably bi-component.

3. The article according to any one of the above claims, wherein the non-moldable material with shape-memory is deposited by coating or impression onto the textile material.

4. The article according to any one of Claims 1 to 3, wherein it is a brassiere and the molded zones (3) are the cups thereof.

5. The article according to Claim 4, wherein the support region extends principally over the lower part of the cups.

6. The article according to Claim 5, wherein the region forms a surface representing at least the half of the lower part of the cups (3).

7. The article according to Claim 6, wherein the region forms an angular section of the cup (3).

8. The article according to any one of Claims 5 to 7, wherein the support region extends to the skirt part (6) under the cup (3).

9. The article according to Claim 8, wherein the support region comprises a continuous lateral vertical part, exterior to the cup (3).

## Patentansprüche

1. Verfahren zum Herstellen eines textilen Dessous- bzw. Unterwäscheartikels aus elastischem Textilmaterial, umfassend zumindest eine Zone (3), die dazu bestimmt ist, durch Wärmeformen des Artikels gebildet zu werden, wobei der Artikel zumindest auf einem Abschnitt (5) der Zone einen Stützbereich aufweist, in dem das Textilmaterial vor dem Formen mit einem anderen Material beschichtet bzw. verkleidet wird, **dadurch gekennzeichnet, dass** das andere Material ein medizinisches Silikongummi bzw. -kautschuk ist, das vor dem Formen auf das Textilmaterial aufgebracht und netzartig angeordnet wird und das, wenn das medizinische Silikongummi gleichzeitig mit der textilen Stofflage geformt wird, auf der es sich befindet, dazu tendiert, auf elastische Weise wieder die ursprüngliche Form anzunehmen, die es vorher hatte.

2. Verfahren nach Anspruch 1, **dadurch gekennzeichnet, dass** das Silikongummi ein thermisch vulkanisierbares Elastomer aus vorzugsweise zwei Komponenten ist.

3. Verfahren nach einem der vorhergehenden Ansprüche, **dadurch gekennzeichnet, dass** das Silikon durch Beschichtung oder Zeug- bzw. Stoffdruck auf das Textilmaterial aufgebracht wird.

4. Verfahren nach einem der Ansprüche 1 bis 3, **dadurch gekennzeichnet, dass** der Artikel ein Büstenhalter ist und die wärmegeformten Zonen (3) die Körbchen bzw. Cups sind.

5. Verfahren nach Anspruch 4, **dadurch gekennzeichnet, dass** sich der Stützbereich hauptsächlich über den unteren Abschnitt der Körbchen erstreckt.

6. Verfahren nach Anspruch 5, **dadurch gekennzeichnet, dass** der Bereich eine Fläche bzw. Oberfläche bildet, die zumindest die Hälfte des unteren Abschnitts der Körbchen (3) darstellt.

7. Verfahren nach Anspruch 6, **dadurch gekennzeichnet, dass** der Bereich einen Winkelsektor bzw. -bereich des Körbchens (3) bildet.

8. Verfahren nach einem der Ansprüche 5 bis 7, **dadurch gekennzeichnet, dass** sich der Stützbereich zu einem Rockabschnitt (6) erstreckt, der unter dem Körbchen (3) liegt.

9. Verfahren nach Anspruch 8, **dadurch gekennzeichnet, dass** der Stützbereich einen durchgängigen, lateralen, vertikalen Abschnitt außerhalb des Körbchens (3) umfasst.
